# EUROPÄISCHE PATENTSCHRIFT

(11) **EP 3 449 145 B1**
(45) Veröffentlichungstag und Bekanntmachung des Hinweises auf die Patenterteilung: **22.01.2020**
(21) Anmeldenummer: 17718812.5
(22) Anmeldetag: 17.03.2017
(51) Int. Cl.: F16D 13/56, F16D 13/70

(54) **KUPPLUNG MIT MOMENTENFLUSSAUFTEILUNG ZUR PARTIELLEN VERSTÄRKUNG**
CLUTCH WITH TORQUE FLOW DISTRIBUTION FOR PARTIAL BOOSTING
EMBRAYAGE À RÉPARTITION DU FLUX DE COUPLE EN VUE D'UN RENFORCEMENT PARTIEL

(30) Priorität: 27.04.2016 DE 102016207116
(43) Veröffentlichungstag der Anmeldung: 06.03.2019
(73) Patentinhaber: Schaeffler Technologies AG & Co. KG, 91074 Herzogenaurach (DE)
(72) Erfinder: CHAMBRION, Martin, 67150 Erstein (FR); SCHMID, Tim, 76316 Malsch (DE)
(86) Internationale Anmeldenummer: PCT/DE2017/100213
(87) Internationale Veröffentlichungsnummer: WO 2017/186209

(56) Entgegenhaltungen:
- WO-A1-2015/070853
- DE-A1-102014 203 959
- DE-T2-602004 001 215
- US-A1- 2007 037 659

## Beschreibung

Die vorliegende Erfindung betrifft eine Kupplung, wie bspw. eine nasse Mehrscheibenoder Lamellenkupplung, etwa nach Art einer Einfachkupplung, einer Doppelkupplung oder einer Hybridkupplung, für ein Kraftfahrzeug, wie bspw. ein Motorrad, ein Pkw, ein Lkw, ein Traktor oder ein anderes Nutzfahrzeug, mit einer Eingangsseite, die zur Drehmomenteneinleitung vorbereitet ist, und eine Ausgangsseite, die zur Drehmomentweitergabe an wenigstens einer Getriebeeingangswelle vorbereitet ist, mit ersten Reibelementen als Teil eines ersten Lamellenpakets und mit zweiten Reibelementen als Teil eines zweiten Lamellenpakets, wobei die ersten Reibelemente, etwa nach Art von (Reib-)Lamellen, mit der Eingangsseite drehmomentübertragend verbunden sind und die zweiten Reibelemente, etwa nach Art von (Stahl-)Lamellen, mit der Ausgangsseite drehmomentübertragend verbunden sind, und wobei die ersten und zweiten Reibelemente durch eine Anpresskraft in Reibeingriff miteinander bringbar sind, um ein Drehmoment von der Eingangsseite zur Ausgangsseite zu übertragen, wobei wenigstens eine Blattfeder vorgesehen ist, welche dazu ausgebildet ist, die Anpresskraft zu verstärken.

Aus dem Stand der Technik sind Lamellenkupplungen bereits hinreichend bekannt. So offenbart bspw. eine Internationale Patentanmeldung mit der Anmeldenummer PCT/ DE 2016 200 043 eine Kupplungseinrichtung, welche einen Innenlamellenträger und einen Außenlamellenträger, die um eine Drehachse drehbar gelagert sind, ein erstes Reibelement, das drehmomentschlüssig und axial verschiebbar am Innenlamellenträger befestigt ist, ein zweites Reibelement, das drehmomentschlüssig und axial verschiebbar am Außenlamellenträger befestigt ist, sowie eine Betätigungseinrichtung zur Bereitstellung eines axialen Anpressdrucks auf die Reibelemente umfasst, um ein Drehmoment zwischen dem Innenlamellenträger und dem Außenlamellenträger zu übertragen. Darüber hinaus ist ein Federelement vorgesehen, das sich schraubenförmig um die Drehachse erstreckt, und zur Verstärkung des axialen Anpressdrucks in Abhängigkeit eines zwischen dem Innenlamellenträger und dem Außenlamellenträger übertragenen Drehmoments dient. Der Anpressdruck wird verstärkt, wenn das Federelement entlang seiner Erstreckung in Zugbelastung steht.

Die WO 2014/139526 offenbart eine Kupplungseinrichtung umfassend eine Eingangsseite und eine Ausgangsseite, die drehbar um eine Achse angeordnet sind, sowie wenigstens einen ersten Reibpartner und wenigstens einen zweiten Reibpartner, wobei der erste Reibpartner drehmomentschlüssig mit der Eingangsseite verbunden ist, wobei der zweite Reibpartner drehmomentschlüssig mit der Ausgangsseite verbunden ist, wobei der erste und der zweite Reibpartner durch eine Anpresskraft in Reibeingriff bringbar sind, um ein Drehmoment zwischen der Eingangsseite und der Ausgangsseite zu übertragen, wobei wenigstens ein Federmittel vorgesehen ist, wobei das Federmittel ausgebildet ist, die Anpresskraft zu verstärken.

Die aus dem Stand der Technik bekannten Federmittel sind in der Regel als Blattfedern ausgebildet, die aufgrund ihres Aufstellwinkels eine Selbstverstärkung der Anpresskraft erzeugen können. Desto größer das Moment, das durch die Blattfedern übertragen wird, umso größer ist die selbstverstärkende Wirkung. Im Stand der Technik wird bisher das gesamte Moment, welches über die Eingangsseite in die Kupplung eingeleitet wird, über die Blattfedern übertragen. So kann zwar eine sehr große selbstverstärkende Wirkung mit einem geringen Aufstellwinkel der Blattfeder erreicht werden, jedoch ist die Belastung der Blattfedern daher auch sehr groß. Dies hat den Nachteil, dass in Impact-Fällen die Knicksicherheit der Blattfedern nicht ausreichend sein kann oder sich die Blattfedern früher setzen, was zum Rutschen der Kupplung führt. Das bedeutet, dass die Lebensdauer der Blattfedern verkürzt ist und die Leistung der Kupplung hierdurch begrenzt ist.

Die WO 2015/070853 offenbart eine Kupplungseinrichtung, bei der ein signifikanter Anteil des zu übertragenen Drehmoments über eine als Blattfeder ausgestaltete Rückstellfeder ausgetauscht werden kann.

Aufgabe der Erfindung ist es, die Nachteile aus dem Stand der Technik zu vermeiden oder wenigstens zu mildern und daher insbesondere eine Kupplung bereitzustellen, in der die Blattfeder ein geringeres Moment übertragen muss.

Die Aufgabe der Erfindung wird durch eine gattungsgemäße Kupplung dadurch gelöst, dass das zweite Lamellenpaket so aufgeteilt ist und dessen Reibelemente an zwei voneinander separaten Drehmomentweitergabeeinrichtungen angebunden sind, dass ein Drehmomentfluss zur Getriebeeingangswelle über einen ersten, die wenigstens eine Blattfeder enthaltenden Drehmomentweg und einen zweiten, davon separaten Drehmomentweg verläuft.

Vorteilhafte Ausführungsformen sind in den Unteransprüchen beansprucht und werden nachfolgend erläutert.

So ist es von Vorteil, wenn der zweite Drehmomentweg blattfederfrei ausgestaltet / konzipiert / ausgelegt ist. So kann über den zweiten Drehmomentweg der Anteil des Eingangsmoments direkt auf die Getriebeeingangswelle übertragen werden.

Die erste Drehmomentweitergabeeinrichtung weist vorteilhafterweise eine Anpressplatte und eine Anpressscheibe, die drehmomentübertragend miteinander verbunden sind und ferner einen Abstützflansch auf, der über die zumindest eine Blattfeder drehmomentübertragend mit der Anpressplatte und der Anpressscheibe verbunden ist. Diese drehmomentübertragenden Verbindungen können form-, kraft- und/oder stoffschlüssig sein. Vorzugsweise werden diese Verbindungen genietet.

Die zweite Drehmomentweitergabeeinrichtung weist vorteilhafterweise einen Lamellenträger und eine Nabe auf, die drehmomentübertragend miteinander verbunden sind. Auch hierbei hat sich eine Nietverbindung als vorteilhaft herausgestellt, jedoch kann die Verbindung auch anderweitig form-, kraft- und/oder stoffschlüssig realisiert sein.

Für die Lamellenpakete hat sich als vorteilhaft herausgestellt, wenn das erste Lamellenpaket zumindest zwei Reibelemente aufweist, die als Reiblamellen ausgebildet sind und das zweite Lamellenpaket zumindest zwei Reibelemente aufweist, die als Stahllamellen ausgebildet sind.

Ferner von Vorteil ist es, wenn der erste Drehmomentweg durch einen ersten Teilbereich des zweiten Lamellenpakets und die erste Drehmomentweitergabeeinrichtung zur Getriebeeingangswelle hin verläuft, wobei die erste Drehmomentweitergabeeinrichtung mittels der Anpressplatte drehmomentübertragend mit dem ersten Teilbereich des zweiten Lamellenpakets verbunden ist und der zweite Drehmomentweg durch einen zweiten Teilbereich des zweiten Lamellenpakets und die zweite Drehmomentweitergabeeinrichtung zur Getriebeeingangswelle hin verläuft, wobei die zweite Drehmomentweitergabeeinrichtung mittels des Lamellenträgers drehmomentübertragend mit dem zweiten Teilbereich des zweiten Lamellenpakets verbunden ist. Somit wird realisiert, dass nur ein Teil des Eingangsmoments über die sich im ersten Drehmomentweg befindliche Blattfeder auf die Getriebeeingangswelle übertragen wird, während der restliche Anteil des Eingangsmoments über den zweiten Drehmomentweg direkt auf die Getriebeeingangswelle übertragen wird.

Darüber hinaus hat sich als vorteilhaft herausgestellt, wenn die Blattfeder zumindest im eingebauten / montierten Zustand einen Aufstellwinkel größer 0° und kleiner 80° aufweist, vorzugsweise zwischen 2° und 65°, weiter vorzugsweise zwischen 5° und 50°, ferner zwischen 10° und 45°.

Die Größe der selbstverstärkenden Wirkung der Kupplung ist abhängig von dem Aufstellwinkel der Blattfeder und dem Moment, das in die Blattfeder eingeleitet bzw. von dieser übertragen wird. Hier gilt, je größer der Aufstellwinkel und/oder das Moment, desto höher ist die selbstverstärkende Wirkung. Das bedeutet, dass bspw. bei einem kleinen Moment, der Aufstellwinkel der Blattfeder größer sein muss als bei einem größerem Moment, um die gleiche selbstverstärkende Wirkung zu erzeugen. Während der Momentenübertragung über die Blattfeder wird diese auf Zug belastet.

Ferner als vorteilhaft herausgestellt hat sich, wenn der Lamellenträger formschlüssig mit dem zweiten Teilbereich des Lamellenpakets verbunden ist, und die Anpressplatte formschlüssig mit dem ersten Teilbereich des zweiten Lamellenpakets verbunden ist. Somit wird die Aufteilung des Eingangsmoments über die Teilbereiche des zweiten Lamellenpakets realisiert bzw. umgesetzt.

Weiter vorteilhaft ist es, wenn der Lamellenträger form- und/oder kraftschlüssig etwa über eine Niete, mit der Nabe verbunden ist. Eine formschlüssige Verbindung der Anpressplatte mit dem ersten Teilbereich des zweiten Lamellenpakets hat sich ebenfalls als vorteilhaft erwiesen. Vorzugsweise weist die Anpressplatte hierfür sickenartige Prägungen auf, die in Aussparungen der Lamellen hineinragen und so mit diesen einen Formschluss ausbilden. Weiter von Vorteil ist es, wenn der Lamellenträger und die Nabe axial fest sind.

Als besonders vorteilhaft herausgestellt hat sich auch, dass mehrere Blattfedern, vorzugweise als Blattfederpaket oder mehrere Blattfederpakete angeordnet / ausgestaltet, vorhanden sind. Die Anpressplatte und die Anpressscheibe sind vorteilhafterweise axial verschieblich.

Die Kupplung umfasst ferner eine Ausrückeinrichtung, welche in der hier gezeigten beispielhaften Ausführungsform zum Lösen der "normally-closed"-Kupplung vorbereitet ist. Im Falle einer "normally-open"-Kupplung dient die Ausrückeinrichtung entsprechend zum Schließen der Kupplung. Daher wird die Ausrückeinrichtung im Fall der "normally-open"-Kupplung auch als Einrückeinrichtung bezeichnet.

Mit anderen Worten besteht die Erfindung darin, dass nur ein Anteil des Moments verstärkt wird. Dies wird über die Trennung des Lamellenträgers in zwei Teile realisiert. Nur das Moment, das von der Anpressplatte übernommen wird, ist verstärkt. Da das Moment der Anpressplatte über die Blattfedern übertragen wird, kann nur dieses Moment verwendet werden, um eine Verstärkung zu erzeugen. Hierfür sind zumindest eine Stahllamelle, vorzugsweise mehrere Stahllamellen, mit der Anpressplatte rotatorisch fest verbunden. Die Anpressplatte wiederum ist über Blattfedern mit dem Abstützflansch verbunden. Der Abstützflansch ist mit der Getriebeeingangswelle über eine Verzahnung drehfest und über die Zentralmutter axial fest verbunden.

Die restlichen Stahllamellen sind mit dem Lamellenträger rotatorisch fest verbunden. Der Lamellenträger ist mit der Nabe vernietet. Die Nabe ist mit der Getriebeeingangswelle über Verzahnungen drehfest und über die Zentralmutter axial fest verbunden. Die Einleitung der Ausrück- und Anpresskräfte wird hierbei so realisiert, dass die Ausrückkraft einen Ausrückring nach oben zieht. Der Ausrückring zieht wiederum die Anpressscheibe, die mit den Blattfedern und der Anpressplatte fest verbunden ist, nach oben. Der Lamellenträger übernimmt hierbei also keine axialen Kräfte. Somit wird eine direktere Einleitung der Ausrückkraft, die gegen die Blattfederkraft wirkt, realisiert. Da weniger Kraft bzw. Moment über die Blattfeder übertragen wird, müssen diese weniger steif sein, wodurch die Masse reduziert werden kann.

Anders formuliert, wird eine als Blattfederkupplung ausgebildete Mehrscheibenkupplung, insbesondere eine nasse Motorradkupplung vorgeschlagen, wobei die Blattfedern im Momentenfluss liegen und im Zugbetrieb des Verbrennungsmotors die Anpresskraft erhöhen, wobei der ausgangsseitige Lamellenträger zweigeteilt ist und nur einen Teil des übertragenen Drehmoments zur Erhöhung der Anpresskraft nutzt. Der erste Teil des ausgangsseitigen Lamellenträgers ist einteilig mit der Anpressplatte ausgebildet, auf die die Ausrückeinrichtung wirkt. Die Blattfedern zur Verstärkung der Anpresskraft sind in diesem ersten Teil des ausgangsseitigen Lamellenträgers angebunden, sodass nur das Drehmoment, das über die Lamellen, die drehfest mit diesem ersten Teil verbunden sind, zur Verstärkung der Anpresskraft genutzt werden kann. Der zweite Teil des ausgangseitigen Lamellenträgers ist fest mit der Nabe verbunden, sodass das über diese Lamellen übertragenen Drehmoment nicht zur Erhöhung der Anpresskraft genutzt wird. Somit kann das Ausknicken der Blattfedern aufgrund eines zu hohen Drehmoments verhindert werden.

Die Erfindung wird nachfolgend mit Hilfe von Figuren näher erläutert, in denen unterschiedliche Ausführungsformen dargestellt sind. Es zeigen:
- Fig. 1: eine perspektivisch dargestellte Querschnittansicht der Kupplung;
- Fig. 2: die perspektivisch dargestellte Querschnittsansicht der Kupplung aus Fig. 1, mit eingezeichnetem Momentenfluss;
- Fig. 3: eine perspektivisch dargestellte Querschnittsansicht der Kupplung, ohne Darstellung der Getriebeeingangswelle und des Abstützflansches;
- Fig. 4: die in Fig. 3 gezeigte Querschnittsansicht ferner ohne den Blattfederkern;
- Fig. 5: eine vergrößerte Ausschnittansicht, zur Verdeutlichung der unterschiedlich ausgestalteten Stahllamellen;
- Fig. 6: eine perspektivische Ansicht der Anpressplatte;
- Fig. 7: eine perspektivische Ansicht des Lamellenträgers;
- Fig. 8: eine perspektivische Ansicht des Abstützflanschs;
- Fig. 9: eine perspektivische Ansicht der Anpressscheibe;
- Fig. 10: eine perspektivische Ansicht des Ausrückrings;
- Fig. 11: eine perspektivische Ansicht des Abstützrings;
- Fig. 12: eine perspektivische Ansicht der Nabe; und
- Fig. 13: eine Explosionsdarstellung der Hauptkomponenten der Kupplung.

Die Figuren sind lediglich schematischer Natur und dienen nur dem Verständnis der Erfindung. Die gleichen Elemente sind mit denselben Bezugszeichen versehen.

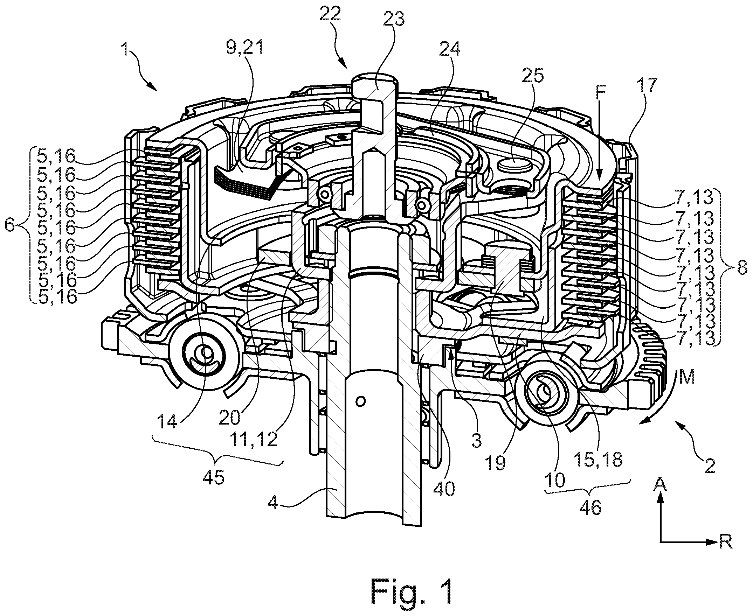

Fig. 1 zeigt eine Querschnittansicht der Kupplung 1 in perspektivischer Darstellung. Über eine Eingangsseite 2 wird ein Drehmoment M in die Kupplung 1 eingeleitet, und über eine Ausgangsseite 3 auf eine Getriebeeingangswelle 4 übertragen. Hierfür weist die Kupplung 1 erste Reibelemente 5 als Teil eines ersten Lamellenpakets 6 und zweite Reibelemente 7 als Teil eines zweiten Lamellenpakets 8 auf. Die ersten und zweiten Reibelemente 5, 7 sind alternierend und ineinander geschachtelt angeordnet und können durch eine Anpresskraft F in Eingriff miteinander gebracht werden. Diese Anpresskraft F kann über eine Blattfeder 9 verstärkt werden.

Ferner weist diese Kupplung 1 eine erste Nabe 10 und eine zweite Nabe 11 auf, wobei die zweite Nabe 11 auch als Abstützflansch 12 bezeichnet werden kann.

Das zweite Lamellenpaket 8 besteht in der hier gezeigten beispielhaften Ausführungsform aus neun zweiten Reibelementen 7, die bspw. als Stahllamellen 13 ausgebildet sind. Die beiden obersten Stahllamellen 13 sind mit einer Anpressplatte 14 drehmomentübertragend verbunden, wohingegen die verbleibenden sieben Stahllamellen 13 mit einem Lamellenträger 15, welcher auch als innerer Kupplungskorb 18 bezeichnet werden kann, rotatorisch fest verbunden sind. Die erste Nabe 10 und der Lamellenträger 15 formen somit eine zweite Drehmomentweitergabeeinrichtung 46.

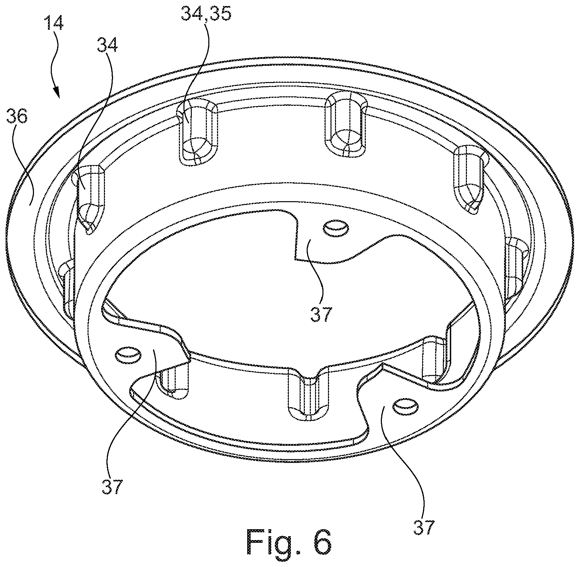

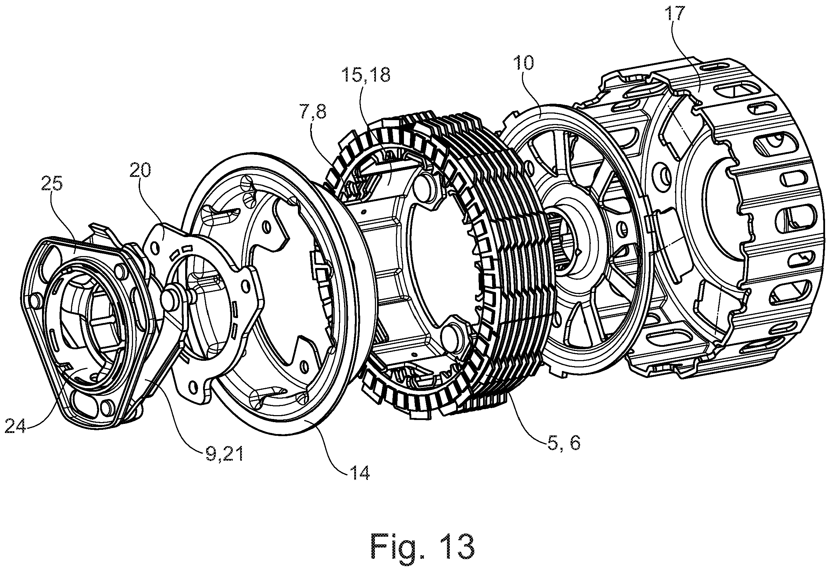

Fig. 13 zeigt eine Explosionsdarstellung der Hauptkomponenten der Kupplung 1, welche die Geometrie der einzelnen Komponenten, sowie deren Zusammenbau verdeutlicht. Insbesondere die Geometrie der wichtigsten Hauptkomponenten bzw. Bauteile der Kupplung 1, sind in den Einzelansichten der entsprechenden Komponenten in den Fign. 6 bis 12 nochmals separat dargestellt.

Das erste Lamellenpaket 6 besteht bspw. aus Reiblamellen 16 und ist mit einem äußeren Kupplungskorb 17 rotatorisch fest verbunden. Die Anpressplatte 14 ist über eine Niete 19 mit einer Anpressscheibe 20 und einem Ende der Blattfeder 9 fest verbunden. Die Anpressplatte 14, die Anpressscheibe 20, die zweite Nabe 11 und/oder der Abstützflansch 12 formen somit eine erste Drehmomentweitergabeeinrichtung 45. Die Blattfeder 9 ist hier als Blattfederpaket 21, bestehend aus mehreren Blattfedern 9, ausgebildet. Das andere Ende des Blattfederpakets 21 ist mit dem Abstützflansch 12 ebenfalls über eine Niete (hier nicht dargestellt) fest verbunden. Der Abstützflansch 12 wiederum ist über eine klassische Welle-Nabe-Verbindung mit der Getriebeeingangswelle 4 drehmomentübertragend verbunden.

Somit wird das von den beiden oberen Stahllamellen 13 übertragene Drehmoment, als Teil des Gesamtdrehmoments M, auf die Anpressplatte 14 übertragen. Die Anpressplatte 14 wiederum überträgt dieses mittels der Nietverbindung 19 auf das Blattfederpaket 21, und somit auf den Abstützflansch 12. Über dem Abstützflansch 12 wird das Drehmoment auf die Getriebeeingangswelle 4 übertragen. Durch die Belastung des Blattfederpakets 21 während der Drehmomentübertragung, drückt dieses die Anpressplatte 14 (und die Anpressscheibe 20) in Axialrichtung A gesehen nach unten somit wird die Anpresskraft F verstärkt, was einer selbstverstärkenden Wirkung der Kupplung 1 entspricht.

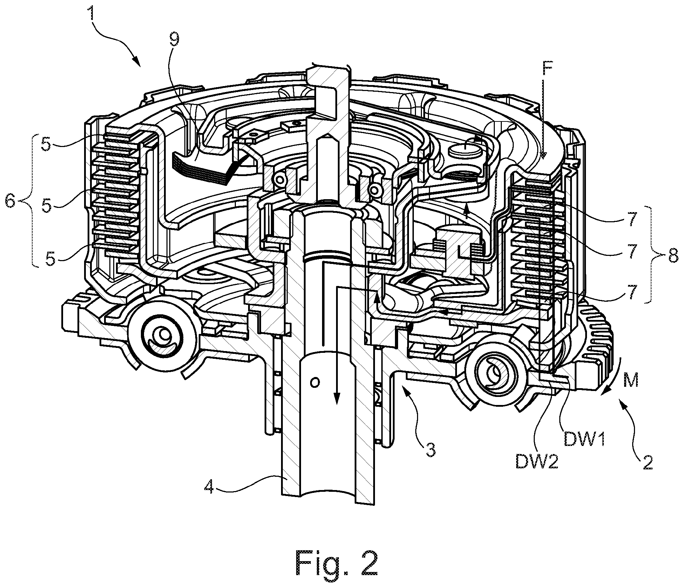

Dieser erste Drehmomentweg DW1 ist in Fig. 2 schematisch über die dickeren Pfeile dargestellt. Der verbleibende Teil des Eingangsdrehmoments M wird über die verbleibenden sieben Stahllamellen 13 auf den Lamellenträger 15 übertragen, der mit der ersten Nabe rotatorisch fest verbunden ist. Die erste Nabe 10 wiederum ist mit der Getriebeeingangswelle über eine Welle-Nabe-Verbindung drehmomentübertragend verbunden, wodurch das über einen zweiten Drehmomentweg kommende Drehmoment über die erste Nabe 10 auf die Getriebeeingangswelle 4 übertragen wird. Dieser zweite Drehmomentweg DW2 ist in Fig. 2 schematisch über dünner ausgeführte Pfeile dargestellt.

Ferner verfügt die Kupplung 1 über eine Ausrückeinrichtung 22, aufweisend einen Ausrücker 23, einen Ausrückring 24 und einen Abstützring 25. Wird die Ausrückeinrichtung 22 betätigt, bewegt sich der Ausrücker 23 in Axialrichtung A gesehen nach oben, und zieht somit dem Ausrückring 24 ebenfalls nach oben. Der Ausrückring 24 ist mit der Anpressscheibe 20 so verbunden (hier nicht zu sehen), dass die Bewegung des Ausrückrings 24 nach oben, die Anpressscheibe 20 ebenfalls nach oben zieht. Da die Anpressscheibe 20 wiederum mit der Anpressplatte 14 fest verbunden ist, wird die Anpressplatte entgegen der Richtung der Anpresskraft F nach oben bewegt, wodurch die selbstverstärkende Wirkung der Kupplung 1 aufgehoben wird, und ferner der Reibkontakt zwischen den ersten Reibelementen 5 und den zweiten Reibelementen 7 gelöst wird, weshalb in diesem Zustand kein Drehmoment mehr von der Eingangsseite 2 zur Ausgangsseite 3 übertragen wird.

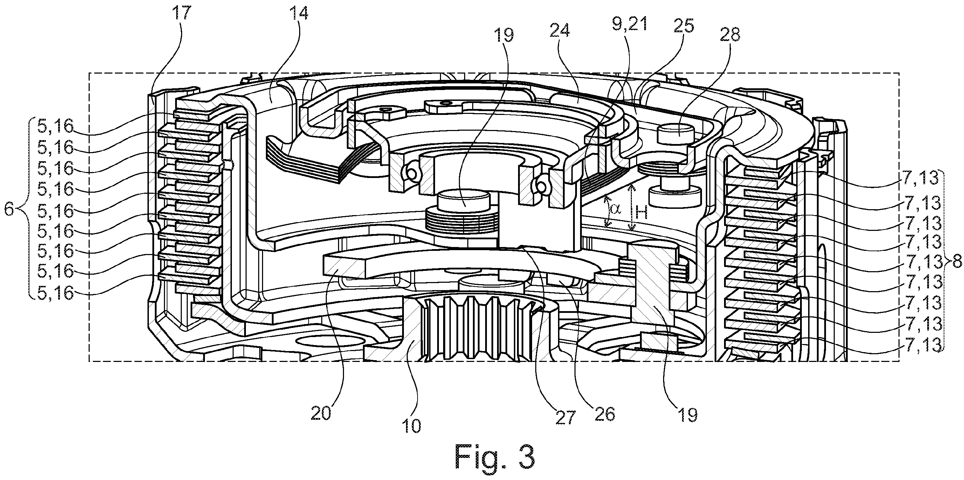

Fig. 3 zeigt eine Querschnittansicht der Kupplung 1 ohne den Ausrücker 23, die Getriebeeingangswelle 4 und den Abstützflansch 12. In dieser Ansicht ist zum einen die Verbindung zwischen dem Ausrückring 24 und der Anpressscheibe 20 zu erkennen. Der Ausrückring 24 greift mittels Formelementen 26 in dafür vorgesehene Aussparungen 27 der Anpressplatte 20 ein. Ferner hier gut zu erkennen, ist, dass die Blattfeder 9 bzw. das Blattfederpaket 21 an einem Ende mit der Anpressplatte 14 über eine Niete 19 drehmomentübertragend verbunden ist, wobei die Niete 19 ferner auch die Anpressscheibe 20 mit der Anpressplatte 14 bzw. der Blattfeder 9 verbindet.

Das andere (hier höher liegende) Ende der Blattfeder 9 ist über eine Niete 28 mit dem Abstützflansch 12 (hier nicht gezeigt) an dem Abstützring 25 befestigt. Hier ebenfalls gut zu erkennen, ist der Höhenversatz H zwischen dem einen Ende der Blattfeder 9 und dem anderen Ende der Blattfeder 9. Dieser Höhenversatz H wird üblicherweise durch einen Winkel zur Horizontalen ausgedrückt, der als Aufstellwinkel α der Blattfeder 9 bezeichnet wird.

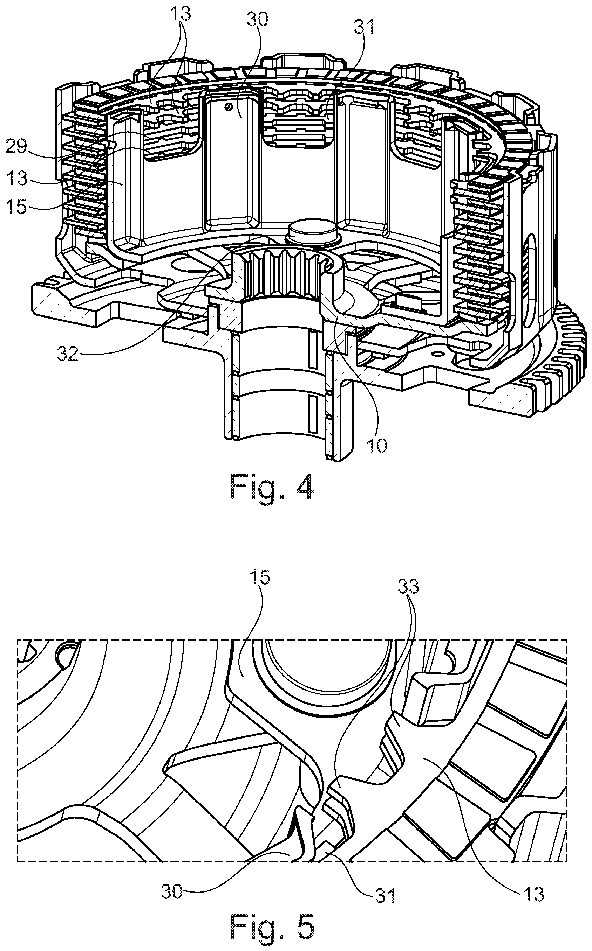

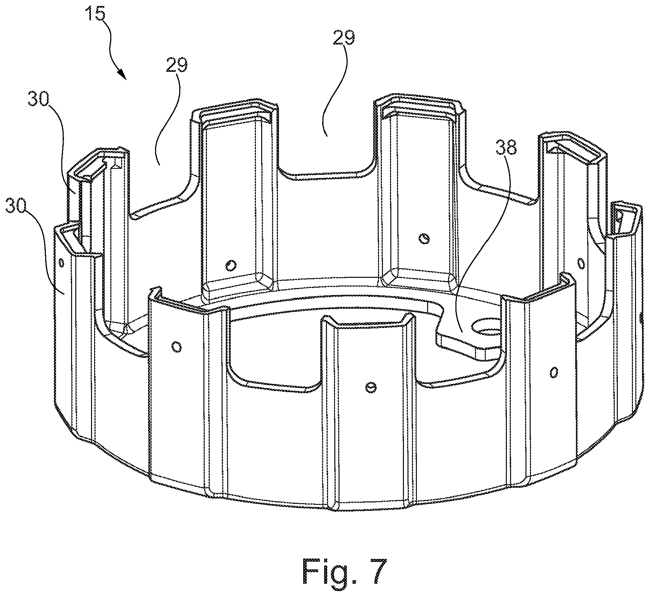

Fig. 4 zeigt die Querschnittsansicht der Kupplung 1 aus Fig. 3 ferner ohne die Ausrückeinrichtung 22 und den Blattfederkern. Hierbei ist zu erkennen, dass der Lamellenträger 15 über Aussparungen 29 verfügt, welche so ausgebildet sind, dass die obersten beiden Stahllamellen 13 mit der Anpressplatte 14 einen Formschluss eingehen können. Ferner verfügt der Lamellenträger 15 über Prägungen 30, welche in Radialrichtung gesehen nach außen vorstehen (siehe auch Fig. 7).

Die Stahllamellen 13, welche mit dem Lamellenträger 15 drehmomentübertragend verbunden sind, sind so ausgebildet, dass sie in Umfangsrichtung Nasen 31 aufweisen, die in Radialrichtung R gesehen nach innen vorstehen. Diese Nasen 31 sind so ausgebildet, dass jeweils zwei Nasen 31 eine Prägung 30 des Lamellenkorbs 15, 18 formschlüssig zwischen sich aufnehmen, bzw. dass die Prägung 30 formschlüssig in den Bereich zwischen zwei Nasen 31 eingreift. Der Lamellenträger 15 ist über eine Nietverbindung 32 mit der Nabe 10 fest verbunden.

In Fig. 5 ist am unteren Rand zu erkennen, dass die Nase 31 außen an der Prägung 30 des Lagerträgers 15 anliegt. Ferner gut zu erkennen ist hier, dass die beiden oberen Stahllamellen 13 in die Aussparung 29 des Lamellenträgers 15 vorstehen bzw. hineinragen und ebenfalls Nasen 33 aufweisen, die radial nach innen zeigen und in deren Zwischenraum eine Prägung 34 (siehe Fig. 6) der Anpressplatte 14 formschlüssig eingreift.

Fig. 6 zeigt eine perspektivische Ansicht der Anpressplatte 14. Diese verfügt wie vorstehend schon beschrieben über Prägungen 34, welche über den Umfang vorzugweise gleich verteilt sind, und in der hier gezeigten Ausführungsform beispielhaft inForm einer Sicke 35 ausgebildet sind. Ferner weist die Anpressplatte 14 einen Randbereich 36 auf, welcher im Zusammenbauzustand der Kupplung 1 als Anlagefläche an die Lamellenpakete 6, 8 dient. Darüber hinaus weist die Anpressplatte 14 mehrere Befestigungsflansche 37 auf, welche zur Anbindung an die Blattfeder 9 bzw. die Anpressscheibe 20 (siehe Fig. 1) dienen.

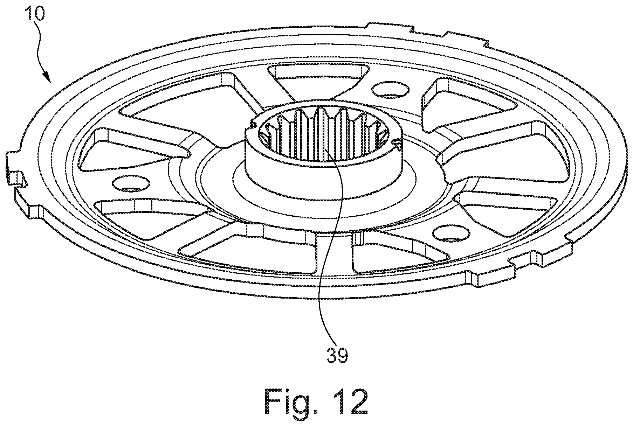

Fig. 7 zeigt den Lamellenträger 15 in perspektivischer Einzelansicht. Gut zu erkennen sind hier die Prägungen 30, welche sich über den Umfang vorzugsweise gleich verteilen. Zwischen den jeweiligen Prägungen 30 befinden sich die Aussparungen 29, welche notwendig sind, damit die oberen Stahllamellen 13 mit der Anpressplatte 14 drehmomentübertragend verbunden werden können. Ferner verfügt der Lamellenträger 15 über einen, vorzugsweise mehrere, Befestigungsflansche 38, über die er mittels einer Nietverbindung fest mit der Nabe 10 (siehe auch Fig. 12) verbunden ist.

Die Nabe 10 weist, wie in Fig. 12 zu sehen, in ihrer Mitte eine nach innen gezahnte Geometrie 39 auf, welche in eine dazu passende Negativgeometrie der Getriebeeingangswelle 4, nach dem Prinzip einer klassischen Welle / Nabe-Verbindung, eingreift und somit das Drehmoment auf die Getriebeeingangswelle 4 überträgt. Die Nabe 10 ist über eine Zentralmutter 40 (siehe Fig. 1) in Axialrichtung festgelegt, und so auch die Funktion einer Gegenplatte erfüllt, wodurch eine (separate) Gegenplatte in der hier gezeigten Ausführungsform entfällt.

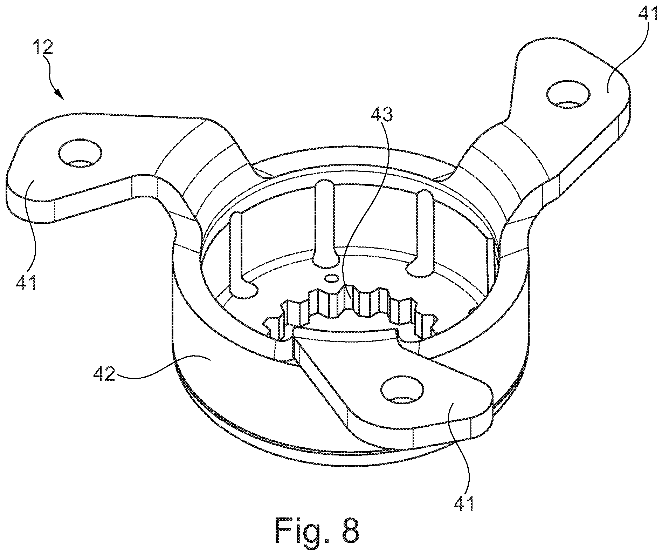

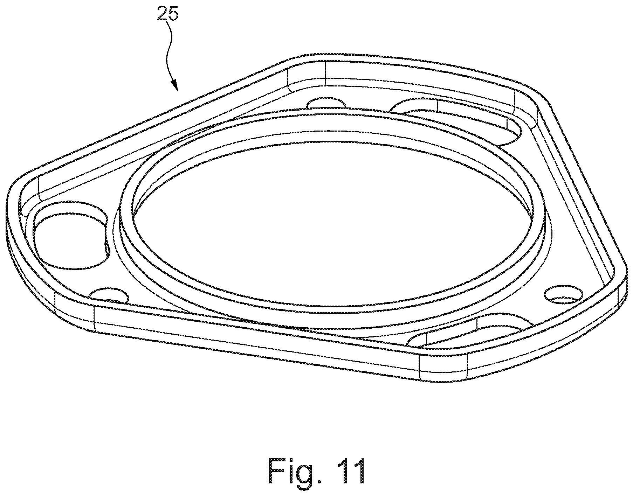

Fig. 8 zeigt den Abstützflansch 12 in perspektivischer Darstellung. Dieser verfügt über, über den Umfang gleichverteilte Befestigungsflansche 41, mittels derer er über Nietverbindungen mit der Blattfeder 9 bzw. dem Blattfederpaket 21 und dem Abstützring 25 (siehe auch Fig. 11) verbunden ist. Der Hauptkörper 42 des Abstützflanschs 12 ist topfartig ausgebildet und weist in der Mitte analog zur Nabe 10 (siehe auch Fig. 12) eine gezahnte Geometrie 43 auf, über die er mittels einer klassischen Welle-Nabe-Verbindung mit der Getriebeeingangswelle 4 drehmomentübertragend verbunden ist.

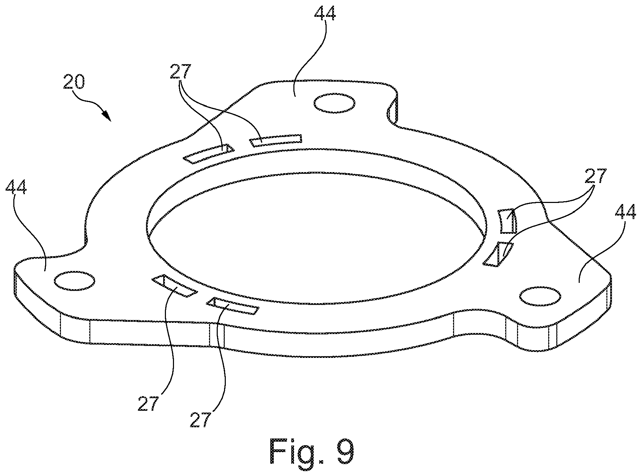

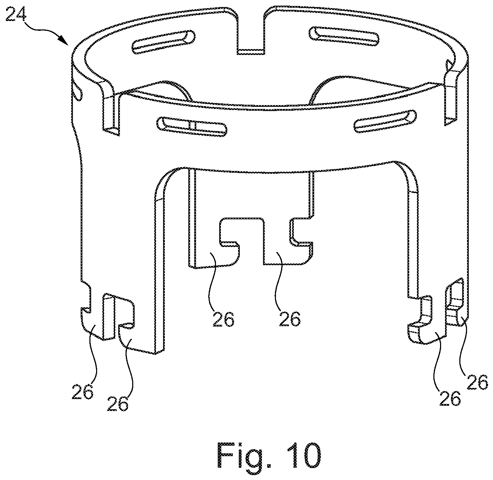

Fig. 9 zeigt die Anpressscheibe 20 in perspektivischer Einzeldarstellung. Die Anpressscheibe ist im Wesentlichen ringartig ausgebildet und weist über ihren Umfang gleichverteilte, in Radialrichtung nach außen vorstehende Befestigungsflansche 44 auf, über die die Anpressscheibe 20 mittels einer Nietverbindung mit der Anpressplatte 14 bzw. der Blattfeder 9 verbunden ist. Ferner weist die Anpressscheibe 20 rechteckförmige Aussparungen 27 auf, in welche die Formelemente 26 des Ausrückrings 24 (siehe auch Fig. 10) formschlüssig eingreifen.

### Bezugszeichenliste

- 1: Kupplung
- 2: Eingangsseite
- 3: Ausgangsseite
- 4: Getriebeeingangswelle
- 5: erstes Reibelement
- 6: erstes Lamellenpaket
- 7: zweites Reibelement
- 8: zweites Lamellenpaket
- 9: Blattfeder
- 10: erste Nabe
- 11: zweite Nabe
- 12: Abstützflansch
- 13: Stahllamelle
- 14: Anpressplatte
- 15: Lamellenträger
- 16: Reiblamelle
- 17: äußerer Kupplungskorb
- 18: innerer Kupplungskorb
- 19: Niete
- 20: Anpressscheibe
- 21: Blattfederpaket
- 22: Ausrückeinrichtung
- 23: Ausrücker
- 24: Ausrückring
- 25: Abstützring
- 26: Formelement
- 27: Aussparung
- 28: Niete
- 29: Aussparung
- 30: Prägung
- 31: Nase
- 32: Niete
- 33: Nase
- 34: Prägung
- 35: Sicke
- 36: Randbereich
- 37: Befestigungsflansch
- 38: Befestigungsflansch
- 39: gezahnte Geometrie
- 40: Zentralmutter
- 41: Befestigungsflansch
- 42: Hauptkörper
- 43: gezahnte Geometrie
- 44: Befestigungsflansch
- 45: erste Drehmomentweitergabeeinrichtung
- 46: zweite Drehmomentweitergabeeinrichtung

- M: Drehmoment
- F: Anpresskraft
- A: Axialrichtung
- R: Radialrichtung
- DW1: Drehmomentweg 1
- DW2: Drehmomentweg 2
- H: Höhenversatz
- α: Aufstellwinkel

## Patentansprüche

1. Kupplung (1), mit einer Eingangsseite (2), die zur Drehmomenteneinleitung vorbereitet ist, und eine Ausgangsseite (3), die zur Drehmomentenweitergabe an wenigstens eine Getriebeeingangswelle (4) vorbereitet ist, mit ersten Reibelementen (5) als Teil eines ersten Lamellenpakets (6) und mit zweiten Reibelementen (7) als Teil eines zweiten Lamellenpakets (8), wobei die ersten Reibelemente (5) mit der Eingangsseite (2) drehmomentübertragend verbunden sind und die zweiten Reibelemente (7) mit der Ausgangsseite (3) drehmomentübertragend verbunden sind und wobei die ersten und zweiten Reibelemente (5, 7) durch eine Anpresskraft (F) in Reibeingriff miteinander bringbar sind, um ein Drehmoment (M) von der Eingangsseite (2) zur Ausgangsseite (3) zu übertragen, wobei wenigstens eine Blattfeder (9) vorgesehen ist, welche dazu ausgebildet ist, die Anpresskraft (F) zu verstärken, **dadurch gekennzeichnet, dass** das zweite Lamellenpaket (8) so aufgeteilt ist und dessen Reibelemente (7) an zwei voneinander separaten Drehmomentweitergabeeinrichtungen (45, 46) angebunden sind, dass ein Drehmomentenfluss zur Getriebeeingangswelle (4) über einen ersten, die wenigstens eine Blattfeder (9) enthaltenen Drehmomentweg (DW1) und einen zweiten, davon separaten Drehmomentweg (DW2) verläuft.

2. Kupplung (1) gemäß Anspruch 1, **dadurch gekennzeichnet, dass** der zweite Drehmomentweg (DW2) blattfederfrei ausgestaltet ist.

3. Kupplung (1) gemäß Anspruch 1 oder 2, **dadurch gekennzeichnet, dass** die erste Drehmomentweitergabeeinrichtung (45) eine Anpressplatte (14) und eine Anpressscheibe (20) aufweist, die drehmomentübertragend miteinander verbunden sind und ferner ein Abstützflansch (11; 12) aufweist, der über die zumindest eine Blattfeder (9) drehmomentübertragend mit der Anpressplatte (14) und der Anpressscheibe (20) verbunden ist.

4. Kupplung (1) gemäß einem der Ansprüche 1 bis 3, **dadurch gekennzeichnet, dass** die zweite Drehmomentweitergabeeinrichtung (46) einen Lamellenträger (15) und eine Nabe (10) aufweist, die drehmomentübertragend miteinander verbunden sind.

5. Kupplung (1) gemäß einem der Ansprüche 1 bis 4, **dadurch gekennzeichnet, dass** das erste Lamellenpaket (6) zumindest zwei Reibelemente (5) aufweist, die als Reiblamellen (16) ausgebildet sind und das zweite Lamellenpaket (8) zumindest zwei Reibelemente (7) aufweist, die als Stahllamellen (13) ausgebildet sind.

6. Kupplung (1) gemäß Anspruch 4 oder 5, **dadurch gekennzeichnet, dass** der erste Drehmomentweg (DW1) durch einen ersten Teilbereich des zweiten Lamellenpakets (8) und die erste Drehmomentweitergabeeinrichtung (45) zur Getriebeeingangswelle (4) verläuft, wobei die erste Drehmomentweitergabeeinrichtung (45) mittels der Anpressplatte (14) drehmomentübertragend mit dem ersten Teilbereich des zweiten Lamellenpakets (8) verbunden ist, und der zweite Drehmomentweg (DW2) durch einen zweiten Teilbereich des zweiten Lamellenpakets (8) und die zweite Drehmomentweitergabeeinrichtung (46) zur Getriebeeingangswelle (4) verläuft, wobei die zweite Drehmomentweitergabeeinrichtung (46) mittels des Lamellenträgers (15) drehmomentübertragend mit dem zweiten Teilbereich des zweiten Lamellenpakets (8) verbunden ist.

7. Kupplung (1) gemäß einem der Ansprüche 1 bis 6, **dadurch gekennzeichnet, dass** die Blattfeder (9) zumindest im eingebauten Zustand einen Aufstellwinkel (a) größer 0° und kleiner 80° aufweist.

8. Kupplung (1) gemäß Anspruch 6 oder 7, **dadurch gekennzeichnet, dass** der Lamellenträger (15) formschlüssig mit dem zweiten Teilbereich des zweiten Lamellenpakets (8) verbunden ist.

9. Kupplung (1) gemäß einem der Ansprüche 6 bis 8, **dadurch gekennzeichnet, dass** die Anpressplatte (14) formschlüssig mit dem ersten Teilbereich des zweiten Lamellenpakets (8) verbunden ist.

## Claims

1. A clutch (1) having an input side (2) configured for torque introduction and an output side (3) configured for torque transmission to at least one transmission input shaft (4), comprising first friction elements (5) as part of a first disc set (6) and comprising second friction elements (7) as part of a second disc set (8), wherein the first friction elements (5) are connected with the input side (2) in a torque-transmitting manner and the second friction elements (7) are connected with the output side (3) in a torque-transmitting manner and wherein the first and second friction elements (5, 7) can be brought into frictional engagement with one another by a contact force (F) in order to transmit a torque (M) from the input side (2) to the output side (3), wherein at least one leaf spring (9) is provided, which is designed to reinforce the contact force (F), **characterised in that** the second disc set (8) is divided such and its friction elements (7) are connected to two separate torque-transmitting devices (45, 46) such that a torque flow to the transmission input shaft (4) runs via a first torque path (DW1) containing the at least one leaf spring (9) and a second torque path (DW2) that is separate therefrom.

2. The clutch (1) according to claim 1, **characterised in that** the second torque path (DW2) is formed without any leaf springs.

3. The clutch (1) according to claim 1 or 2, **characterised in that** the first torque-transmitting device (45) comprises a pressure plate (14) and a pressure disc (20), which are connected to each other in a torque-transmitting manner and further comprises a support flange (11, 12), which is connected via the at least one leaf spring (9) with the pressure plate (14) and the pressure disc (20) in a torque-transmitting manner.

4. The clutch (1) according to one of claims 1 to 3, **characterised in that** the second torque-transmitting device (46) has a disc carrier (15) and a hub (10), which are connected to each other in a torque-transmitting manner.

5. The clutch (1) according to one of claims 1 to 4, **characterised in that** the first disc set (6) has at least two friction elements (5), which are designed as friction discs (16) and the second disc set (8) has at least two friction elements (7), which are formed as steel discs (13).

6. The clutch (1) according to claim 4 or 5, **characterised in that** the first torque path (DW1) extends through a first portion of the second disc set (8) and the first torque-transmitting device (45) extends to the transmission input shaft (4), wherein the first torque-transmitting device (45) is connected by means of the pressure plate (14) to the first portion of the second disc set (8) in a torque-transmitting manner, and the second torque path (DW2) extends through a second portion of the second disc set (8) and the second torque-transmitting device (46) extends to the transmission input shaft (4), wherein the second torque-transmitting device (46) is connected by means of the disc carrier (15) to the second portion of the second disk set (8) in a torque-transmitting manner.

7. The clutch (1) according to one of claims 1 to 6, **characterised in that** the leaf spring (9) at least in the installed state has a set-up angle (a) greater than 0° and less than 80°.

8. The clutch (1) according to claim 6 or 7, **characterised in that** the disc carrier (15) is positively connected to the second portion of the second disc set (8).

9. The clutch (1) according to one of claims 6 to 8, **characterised in that** the pressure plate (14) is positively connected to the first portion of the second disc set (8).

## Revendications

1. Embrayage (1) ayant un côté entrée (2) préparé pour l'application d'un couple et un côté sortie (3) préparé pour la transmission du couple à au moins un arbre d'entrée de transmission (4), comprenant des premiers éléments de friction (5) faisant partie d'un premier jeu de disques (6) et avec des seconds éléments de friction (7) faisant partie d'un second jeu de disques (8), les premiers éléments de friction (5) étant reliés, de manière à transmettre le couple, au côté entrée (2) et les seconds éléments de friction (7) étant reliés, de manière à transmettre le couple, au côté sortie (3) et les premiers et seconds éléments de friction (5, 7) pouvant être amenés mutuellement en prise par friction par une force de pression (F) afin de transmettre un couple (M) du côté entrée (2) au côté sortie (3), au moins un ressort à lame (9) étant prévu, qui est conçu pour renforcer la force de pression (F), **caractérisé en ce que** le second jeu de disques (8) est réparti et ses éléments de friction (7) sont reliés à deux dispositifs de transmission de couple séparés (45, 46), de manière à ce qu'un flux de couple soit transmis à l'arbre d'entrée de transmission (4) par l'intermédiaire d'un premier trajet de couple (DW1) contenant au moins un ressort à lame (9) et d'un second trajet de couple séparé (DW2).

2. Embrayage (1) selon la revendication 1, **caractérisé en ce que** le second trajet de couple (DW2) est configuré sans ressort à lames.

3. Embrayage (1) selon la revendication 1 ou 2, **caractérisé en ce que** le premier dispositif transmettant le couple (45) comprend un plateau de pression (14) et un disque de pression (20) reliés l'un à l'autre de manière à transmettre le couple et comprenant en outre une bride de support (11 ; 12). qui est reliée par au moins un ressort à lame (9), de manière à transmettre le couple, au plateau de pression (14) et au disque de pression (20).

4. Embrayage (1) selon l'une quelconque des revendications 1 à 3, **caractérisé en ce que** le second dispositif de transmission de couple (46) comporte un porte-disques (15) et un moyeu (10) reliés l'un à l'autre de manière à transmettre le couple.

5. Embrayage (1) selon l'une quelconque des revendications 1 à 4, **caractérisé en ce que** le premier jeu de disques (6) présente au moins deux éléments de friction (5) conçus comme des disques de friction (16) et le second jeu de disques (8) présente au moins deux éléments de friction (7) qui sont formés comme des disques d'acier (13).

6. Embrayage (1) selon la revendication 4 ou 5, **caractérisé en ce que** le premier trajet de couple (DW1) traverse une première partie du second jeu de disques (8) et le premier dispositif de transmission de couple (45) jusqu'à l'arbre d'entrée de transmission (4), le premier dispositif de transmission de couple (45) étant relié, de manière à transmettre le couple, au moyen du plateau de pression (14), à la première partie du second jeu de disques (8) et le second trajet de couple (DW2) traverse une seconde partie du second jeu de disques (8) et du second dispositif de transmission de couple (46) jusqu'à l'arbre d'entrée de transmission (4), le second dispositif de transmission de couple (46) étant relié, de manière à transmettre le couple, au moyen du porte-disques (15), à la seconde partie du second jeu de disques (8).

7. Embrayage (1) selon l'une quelconque des revendications 1 à 6, **caractérisé en ce que** le ressort à lame (9) présente au moins à l'état installé, un angle de montage (a) supérieur à 0° et inférieur à 80°.

8. Embrayage (1) selon la revendication 6 ou 7, **caractérisé en ce que** le porte-disques (15) est relié par complémentarité de forme à la seconde partie du second jeu de disques (8).

9. Embrayage (1) selon l'une quelconque des revendications 6 à 8, **caractérisé en ce que** le plateau de pression (14) est relié par complémentarité de forme à la première partie du second jeu de disques (8).
